# EUROPEAN PATENT APPLICATION

(11) **EP 4 794 189 A1**
(43) Date of publication of application: **19.08.2026**
(21) Application number: 25812887.5
(22) Date of filing: 30.01.2025
(51) Int. Cl.: H02P 23/20, H02P 23/14

(54) **MOTOR REGENERATION CONTROL METHOD, MOTOR CONTROL CIRCUIT, AND REGENERATION CONTROL PROGRAM**

(30) Priority: 19.12.2024 JP 2024223944
(71) Applicant: Shindengen Electric Manufacturing Co., Ltd., Tokyo 100-0004 (JP)
(72) Inventor: YAMAGUCHI, Hiroki, Asaka City, Saitama 351-8503 (JP); MASAMITSU, Toshihiko, Asaka City, Saitama 351-8503 (JP); YAHAGI, Hokuto, Asaka City, Saitama 351-8503 (JP)
(74) Representative: Isern Patentes y Marcas S.L.
(86) International application number: PCT/JP2025/003030
(87) International publication number: WO 2026/133572

(57) **Abstract**

[Problem] Provided is a motor regenerative control method that performs regenerative control without creating an adaptive map value.

[Solution] The invention relates to a motor regenerative control method that allows a negative current to flow to a motor such that a regenerative current flows to a battery to charge the battery. The motor regenerative control method includes: setting a target regenerative current value based on a state of the battery; allowing the negative current to flow to the motor such that the regenerative current is close to the target regenerative current value and measuring the regenerative current while allowing the regenerative current to flow to the battery; performing feedback control to allow the negative current to flow to the motor so as to eliminate a difference between a regenerative current value and the target regenerative current value; determining whether the regenerative current value is increasing or decreasing; maintaining the feedback control when it is determined that the regenerative current value is increasing; and when it is determined that the regenerative current value is not capable of reaching the target regenerative current value and is decreasing, detecting a maximum regenerative current value based on a history of the regenerative current value and adjusting and controlling the current flowing to the motor such that the regenerative current value reaches the maximum regenerative current value.

## Description

### TECHNICAL FIELD

The present invention relates to a motor regenerative control method, a motor control circuit, and a motor regenerative control program.

### BACKGROUND ART

Motor regenerative control according to the related art is performed by inputting a command for a motor current value according to an adaptive map value, based on a motor speed and a regeneration target current value. A technique related to the motor regenerative control is disclosed in Patent Document 1.

A large number of measurements using a motor bench need to be performed in order to create the above-mentioned adaptive map value. In addition, motor bench measurements corresponding to the number of map lattices are required. Further, a plurality of map measurements corresponding to fluctuations in battery voltage are required. As described above, a lot of time and effort is required to create a large number of adaptive map values.

Therefore, there is a need for a method for performing motor regenerative control without creating an adaptive map value.

### CITATION LIST

### PATENT DOCUMENT

Patent Document 1: JP 10-014010 A

### DISCLOSURE OF THE INVENTION

### PROBLEM TO BE SOLVED BY THE INVENTION

An object of various aspects of the invention is to provide a motor regenerative control method, a motor control circuit, and a motor regenerative control program that can perform motor regenerative control without creating an adaptive map value.

### MEANS FOR SOLVING PROBLEM

Various aspects of the invention will be described below.
[1] There is provided a motor regenerative control method that, after allowing a positive current to flow from a battery to a motor such that the motor generates a positive torque, allows a negative current to flow to the motor such that a regenerative current flows from the motor to the battery to charge the battery. The motor regenerative control method includes: setting a target regenerative current value based on a state of the battery; allowing the negative current to flow to the motor such that the regenerative current is close to the target regenerative current value and measuring the regenerative current while allowing the regenerative current to flow to the battery; performing feedback control to allow the negative current to flow to the motor so as to eliminate a difference between measured regenerative current value and the target regenerative current value; determining whether the measured regenerative current value is increasing or decreasing; maintaining the feedback control when it is determined that the measured regenerative current value is increasing; and, when it is determined that the measured regenerative current value is not capable of reaching the target regenerative current value and is decreasing, detecting a maximum regenerative current value based on a history of the measured regenerative current value and adjusting and controlling the current flowing to the motor such that the regenerative current value reaches the maximum regenerative current value.

According to the motor regenerative control method of [1] according to an aspect of the invention, the negative current flows to the motor such that the regenerative current is close to the target regenerative current value, and the regenerative current is measured while flowing to the battery. The feedback control to allow the negative current to flow to the motor so as to eliminate the difference between the measured regenerative current value and the target regenerative current value is performed. It is determined whether the measured regenerative current value is increasing or decreasing. When it is determined that the measured regenerative current value is increasing, the feedback control is maintained. When it is determined that the measured regenerative current value is decreasing, the maximum regenerative current value is detected based on the history of the measured regenerative current value, and the current flowing to the motor is adjusted and controlled such that the regenerative current value reaches the maximum regenerative current value. Therefore, it is not necessary to create an adaptive map value when performing motor regenerative control. As a result, it is possible to reduce the time and effort required to create a large number of adaptive map values.

[2] In the motor regenerative control method according to [1], the regenerative current is measured continuously or intermittently.

[3] In the motor regenerative control method according to [1] or [2], when it is determined whether the measured regenerative current value is increasing or decreasing, the measured regenerative current value is compared with a regenerative current value measured before the measured regenerative current value**.** When the measured regenerative current value has increased by a predetermined value or more, it is determined that the measured regenerative current value is increasing. When the measured regenerative current value has decreased by a predetermined value or more, it is determined that the measured regenerative current value is decreasing.

[4] In the motor regenerative control method according to [1] or [2], the feedback control is PI control.

[5] In the motor regenerative control method according to [1] or [2], the motor regenerative control method is a control method that does not use an adaptive map value.

According to the motor regenerative control method of [5] according to the aspect of the invention, since the motor regenerative control method is the control method that does not use the adaptive map value when performing motor regenerative control, it is not necessary to create the adaptive map value. As a result, it is possible to reduce the time and effort required to create a large number of adaptive map values.

[6] There is provided a motor control circuit that, after allowing a positive current to flow from a battery to a motor through an inverter circuit such that the motor generates a positive torque, allows a negative current to flow from the battery to the motor through the inverter circuit such that a regenerative current flows from the motor to the battery to charge the battery. The motor control circuit includes: an inverter drive control unit controlling drive of the inverter circuit; a power supply current measurement unit that sets a target regenerative current value based on a state of the battery, allows the negative current to flow to the motor such that the regenerative current is close to the target regenerative current value, and measures the regenerative current while allowing the regenerative current to flow to the battery; a motor current command unit that determines a current command value for allowing the negative current to flow to the motor so as to eliminate a difference between a regenerative current value measured by the power supply current measurement unit and the target regenerative current value and inputs the current command value to the inverter drive control unit; and a determination unit determining whether the regenerative current value measured by the power supply current measurement unit is increasing or decreasing. When the determination unit determines that the regenerative current value measured by the power supply current measurement unit is increasing, the motor current command unit continues control to allow the negative current to flow to the motor so as to eliminate the difference between the regenerative current value measured by the power supply current measurement unit and the target regenerative current value. When the determination unit determines that the regenerative current value measured by the power supply current measurement unit is not capable of reaching the target regenerative current value and is decreasing, the power supply current measurement unit detects a maximum regenerative current value based on a history of the measured regenerative current value, and the motor current command unit determines a current command value for adjusting the current flowing to the motor such that the regenerative current value reaches the maximum regenerative current value and inputs the current command value to the inverter drive control unit.

According to the motor control circuit of [6] according to another aspect of the invention, the motor current command unit determines the current command value for allowing the negative current to flow to the motor so as to eliminate the difference between the regenerative current value measured by the power supply current measurement unit and the target regenerative current value and inputs the current command value to the inverter drive control unit. The determination unit determines whether the regenerative current value measured by the power supply current measurement unit is increasing or decreasing. When the determination unit determines that the regenerative current value measured by the power supply current measurement unit is not capable of reaching the target regenerative current value and is decreasing, the power supply current measurement unit detects the maximum regenerative current value based on the history of the measured regenerative current value, and the motor current command unit determines the current command value for adjusting the current flowing to the motor such that the regenerative current value reaches the maximum regenerative current value and inputs the current command value to the inverter drive control unit. Therefore, it is not necessary to create an adaptive map value when performing motor regenerative control. As a result, it is possible to reduce the time and effort required to create a large number of adaptive map values.

[7] There is provided a motor regenerative control program implementing regenerative control that, after allowing a positive current to flow from a battery to a motor such that the motor generates a positive torque, allows a negative current to flow to the motor such that a regenerative current flows from the motor to the battery to charge the battery. The motor regenerative control program implements: a function (a) of setting a target regenerative current value based on a state of the battery; a function (b) of allowing the negative current to flow to the motor such that the regenerative current is close to the target regenerative current value and measuring the regenerative current while allowing the regenerative current to flow to the battery; a function (c) of performing feedback control to allow the negative current to flow to the motor so as to eliminate a difference between measured regenerative current value and the target regenerative current value; a function (d) of determining whether the measured regenerative current value is increasing or decreasing; a function (e) of maintaining the feedback control when it is determined that the measured regenerative current value is increasing; and a function (f) of, when it is determined that the measured regenerative current value is not capable of reaching the target regenerative current value and is decreasing, detecting a maximum regenerative current value based on a history of the measured regenerative current value and adjusting and controlling the current flowing to the motor such that the regenerative current value reaches the maximum regenerative current value.

### EFFECT OF THE INVENTION

According to various aspects of the invention, it is possible to provide a motor regenerative control method, a motor control circuit, and a motor regenerative control program that can perform motor regenerative control without creating an adaptive map value.

### BRIEF DESCRIPTION OF DRAWINGS

FIG. 1 is a view showing a relationship between a motor current and a regenerative current for describing a motor regenerative control method according to an aspect of the invention;
FIG. 2 is a view showing the relationship between the motor current and the regenerative current for describing the motor regenerative control method according to the aspect of the invention;
FIG. 3 is a view showing a configuration of a motor control circuit according to an aspect of the invention;
FIG. 4 is a view showing a timing chart of an example of feedback control (PI control and new control) in motor control according to an aspect of the invention; and
FIG. 5 is a view showing a flow of a current during acceleration (powering) and deceleration (regeneration) of a motor according to an aspect of the invention.

### MODE(S) FOR CARRYING OUT THE INVENTION

Hereinafter, embodiments of the invention will be described in detail with reference to the drawings. However, the invention is not limited to the following description, and it will be easily understood by those skilled in the art that various changes can be made in form and details without departing from the gist and scope of the invention. Therefore, the invention should not be construed as being limited to the content described in the following embodiments.

### (First Embodiment)

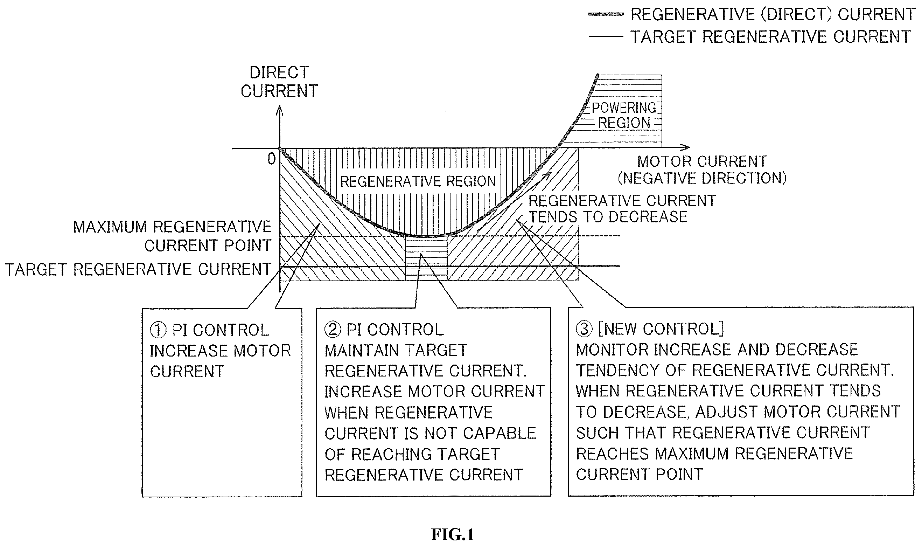

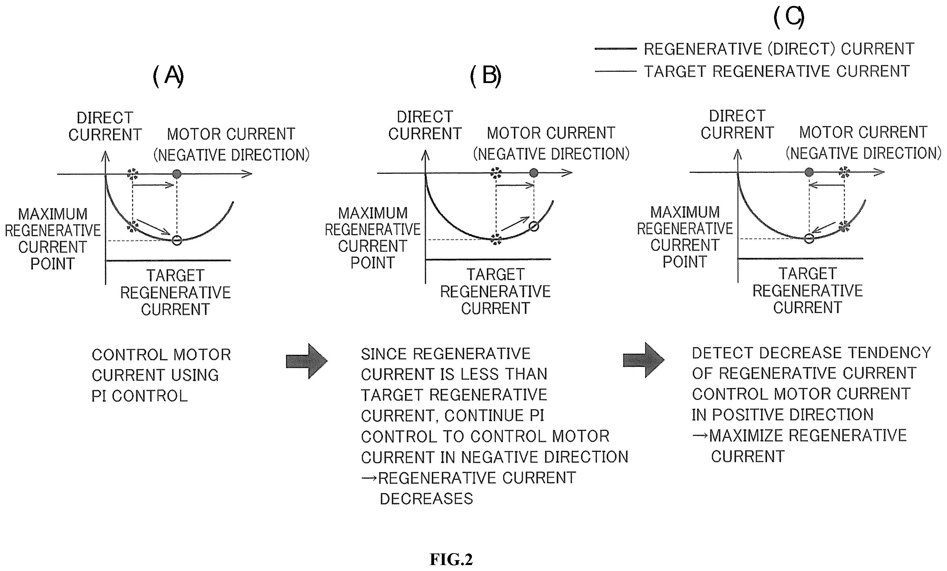

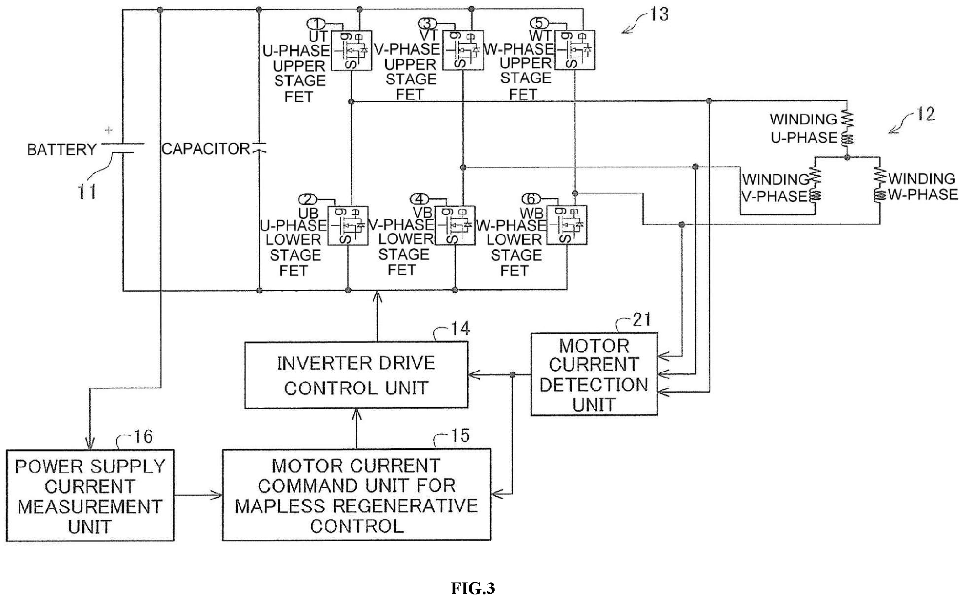

FIG. 1 is a view showing a relationship between a motor current and a regenerative current for describing a motor regenerative control method according to an aspect of the invention. FIG. 2 is a view showing the relationship between the motor current and the regenerative current for describing the motor regenerative control method according to the aspect of the invention. FIG. 3 is a view showing a configuration of a motor control circuit according to an aspect of the invention.

The motor regenerative control method will be described in which, after a positive current flows from a battery 11 shown in FIG. 1 to a motor 12 such that the motor 12 generates a positive torque, a negative current flows to the motor 12 such that a regenerative current flows from the motor 12 to the battery 11 to charge the battery 11.

First, a target regenerative current value is set based on a state of the battery 11 or based on the state of the battery 11 and a state of the motor 12. The target regenerative current value is set by a target regenerative current setting unit. The target regenerative current setting unit is included in a motor current command unit 15 for mapless regenerative control shown in FIG. 3. In addition, in some cases, the target regenerative current value is, for example, about several tens of amperes.

Then, the negative current flows to the motor 12 such that the regenerative current is close to the target regenerative current value, and the regenerative current is measured while flowing to the battery 11. The value of the regenerative current is measured by a power supply current measurement unit 16 shown in FIG. 3, and data of the measured regenerative current value is sent to the motor current command unit 15 for mapless regenerative control. Further, the regenerative current may be measured continuously or intermittently.

Then, feedback control is performed that allows the negative current to flow to the motor 12 so as to eliminate a difference between the regenerative current value measured by the power supply current measurement unit 16 and the target regenerative current value. For example, proportional-integral control (PI control) may be used as the feedback control.

Then, it is determined whether the regenerative current value measured by the power supply current measurement unit 16 is increasing or decreasing. This determination is performed by a determination unit. The determination unit is included in the motor current command unit 15 for mapless regenerative control shown in FIG. 3.

In addition, when the determination unit determines whether the measured regenerative current value is increasing or decreasing, the measured regenerative current value is compared with a regenerative current value measured before the measured regenerative current value. When the measured regenerative current value has increased by a predetermined value or more, it is determined that the regenerative current value is increasing. When the measured regenerative current value has decreased by a predetermined value or more, it is determined that the regenerative current value is decreasing (see FIGS. 2(A) to 2(C)).

When the determination unit determines that the regenerative current value is increasing, the feedback control is maintained. That is, as shown in FIG. 2(A), control is performed such that the regenerative current value is close to the target regenerative current value by the feedback control. In addition, as shown in FIG. 2(B), when it is determined that the regenerative current value is not capable of reaching the target regenerative current value and is decreasing, a maximum regenerative current value is detected based on a history of the regenerative current value, and the current flowing to the motor 12 is adjusted and controlled such that the regenerative current value reaches the maximum regenerative current value (see FIG. 2(C)). That is, when it is determined (detected) that the regenerative current value is decreasing, the motor current is controlled in a positive direction such that the regenerative current value is maximized. Further, a detection unit that detects the maximum regenerative current value is included in the motor current command unit 15 for mapless regenerative control.

The above-described motor regenerative control method is preferably a control method that does not use an adaptive map value.

According to this embodiment, the control method does not use the adaptive map value when performing motor regenerative control. Therefore, it is not necessary to create the adaptive map value. As a result, it is possible to reduce the time and effort required to create a large number of adaptive map values.

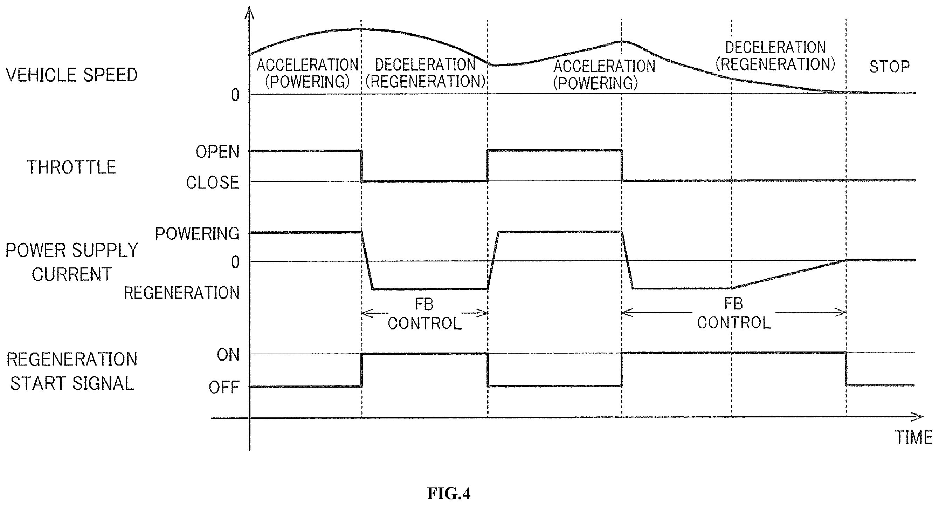

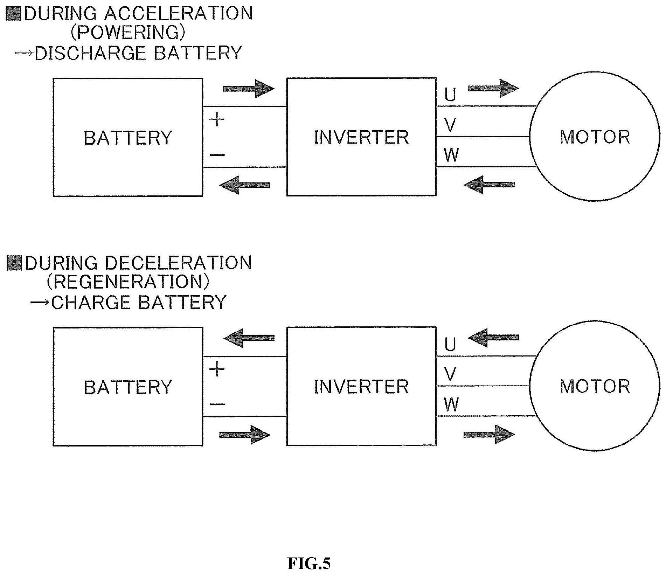

FIG. 4 is a view showing a timing chart of an example of the feedback control (PI control and new control) in the motor control according to an aspect of the invention. FIG. 5 is a view showing a flow of the current during acceleration (powering) and deceleration (regeneration) of the motor according to an aspect of the invention.

The motor regenerative control and the feedback control (FB control) are performed when a vehicle speed is decreased as shown in FIG. 4 and when a throttle is closed. At that time, a regeneration start signal is turned on.

In addition, when the vehicle speed is increased (during powering) as shown in FIG. 4, the current discharged from the battery flows to the motor through an inverter as shown in FIG. 5. In addition, when the vehicle speed is decreased (during regeneration) as shown in FIG. 4, the current flows from the motor to the battery through the inverter to charge the battery.

According to this embodiment, the negative current flows to the motor 12 such that the regenerative current value is close to the target regenerative current value, and the regenerative current is measured while flowing to the battery 11. The feedback control is performed to allow the negative current to the motor 12 so as to eliminate the difference between the measured regenerative current value and the target regenerative current value. It is determined whether the measured regenerative current value is increasing or decreasing. When it is determined that the measured regenerative current value is increasing, the feedback control is maintained. When it is determined that the measured regenerative current value is decreasing, the maximum regenerative current value is detected based on the history of the measured regenerative current value. The current flowing to the motor 12 is adjusted and controlled such that the regenerative current value reaches the maximum regenerative current value. Therefore, it is possible to make the regenerative current value close to the target regenerative current value in real time and to maximize the regenerative current. In addition, it is not necessary to create an adaptive map value when performing the motor regenerative control. As a result, it is possible to reduce the time and effort required to create a large number of adaptive map values.

### (Second Embodiment)

A motor control circuit according to an aspect of the invention will be described with reference to FIGS. 1 to 3.

The motor control circuit shown in FIG. 3 is a circuit in which, after a positive current flows from the battery 11 to the motor 12 through an inverter circuit 13 (see FIG. 5) such that the motor 12 generates a positive torque, a negative current flows from the battery 11 to the motor 12 through the inverter circuit 13 (see FIG. 5) such that a regenerative current flows from the motor 12 to the battery 11 to charge the battery 11.

The motor control circuit has an inverter drive control unit 14 that controls the drive of the inverter circuit 13. The motor control circuit has a target regenerative current setting unit that sets the target regenerative current value based on the state of the battery 11 or based on the state of the battery 11 and the state of the motor 12, and the target regenerative current setting unit is included in the motor current command unit 15 for mapless regenerative control shown in FIG. 3.

The negative current flows to the motor 12 under the control of the inverter drive control unit 14 in order to make the regenerative current value close to the target regenerative current value set by the target regenerative current setting unit. Then, the regenerative current is measured by the power supply current measurement unit 16 while flowing to the battery 11. In addition, when the negative current flows to the motor 12, the motor current detection unit 21 detects the current value of the motor 12, and data of the current value is transmitted to the inverter drive control unit 14 and the motor current command unit 15 for mapless regenerative control.

The motor current command unit 15 determines a current command value for allowing the negative current to flow to the motor 12 so as to eliminate the difference between the regenerative current value measured by the power supply current measurement unit 16 and the target regenerative current value and inputs the current command value to the inverter drive control unit 14. Then, the inverter drive control unit 14 controls the drive of the inverter circuit 13 such that the negative current based on the current command value flows to the motor 12 (see FIG. 2(A)).

The determination unit included in the motor current command unit 15 for mapless regenerative control determines whether the regenerative current value measured by the power supply current measurement unit 16 is increasing or decreasing. When the determination unit determines that the regenerative current value measured by the power supply current measurement unit 16 is increasing, the motor current command unit 15 continues to the control to allow the negative current to flow to the motor 12 so as to eliminate the difference between the regenerative current value measured by the power supply current measurement unit 16 and the target regenerative current value (see FIG. 2(A)).

In addition, when the determination unit determines that the regenerative current value measured by the power supply current measurement unit 16 is not capable of reaching the target regenerative current value and is decreasing, the power supply current measurement unit 16 detects the maximum regenerative current value based on the history of the regenerative current value and inputs data of the maximum regenerative current value to the motor current command unit 15. Further, the power supply current measurement unit 16 has a storage unit that stores the history of the regenerative current value. Then, the motor current command unit 15 determines a current command value for adjusting the current flowing to the motor 12 such that the regenerative current value reaches the maximum regenerative current value, and inputs the current command value to the inverter drive control unit 14. For example, the inverter drive control unit 14 controls the motor current in the positive direction such that the regenerative current value is maximized.

According to this embodiment, as shown in FIG. 2(A), the motor current command unit 15 determines the current command value for allowing the negative current to flow to the motor 12 so as to eliminate the difference between the regenerative current value measured by the power supply current measurement unit 16 and the target regenerative current value. Then, the motor current command unit 15 inputs the current command value to the inverter drive control unit 14, and the determination unit determines whether the regenerative current value measured by the power supply current measurement unit 16 is increasing or decreasing. When the determination unit determines that the regenerative current value measured by the power supply current measurement unit 16 is not capable of reaching the target regenerative current value and is decreasing, the power supply current measurement unit 16 detects the maximum regenerative current value based on the history of the measured regenerative current value. The motor current command unit 15 determines the current command value for adjusting the current flowing to the motor 12 such that the regenerative current value reaches the maximum regenerative current value and inputs the current command value to the inverter drive control unit 14. Therefore, it is not necessary to create an adaptive map value when performing motor regenerative control and thus to reduce the time and effort required to create a large number of adaptive map values.

### (Third Embodiment)

A motor regenerative control program according to an aspect of the invention will be described.

The motor regenerative control program is a program for implementing regenerative control that, after allowing a positive current to flow from the battery 11 shown in FIG. 3 to the motor 12 (see FIG. 5) such that the motor 12 generates a positive torque, allows a negative current to flow from the battery 11 to the motor 12 through the inverter circuit 13 (see FIG. 5) such that a regenerative current flows from the motor 12 to the battery 11 to charge the battery 11.

This program is a motor regenerative control program implementing the following functions (a) to (f). In addition, the program causes a microcomputer to implement the following functions, and other programs may be used as long as they can implement the following functions.
- Function (a): A function of setting a target regenerative current value based on the state of the battery 11. In addition, the target regenerative current value is set based on the state of the battery 11 or based on the state of the battery 11 and the state of the motor 12.
- Function (b): A function of allowing a negative current to flow to the motor 12 such that the regenerative current value is close to the target regenerative current value set by function (a) and measuring the regenerative current while allowing the regenerative current to flow to the battery 11.
- Function (c): A function of performing feedback control to allow the negative current to flow to the motor 12 so as to eliminate the difference between the regenerative current value measured by function (b) and the target regenerative current value.
- Function (d): A function of determining whether the measured regenerative current value is increasing or decreasing. In detail, a function of measuring the regenerative current while allowing the current to flow to the motor 12 under the feedback control in function (c) and determining whether the measured regenerative current value is increasing or decreasing.
- Function (e): A function of maintaining the feedback control when it is determined that the measured regenerative current value is increasing. In detail, a function of measuring the regenerative current while allowing the current to flow to the motor 12 under the feedback control in function (c) and maintaining the feedback control when it is determined that the measured regenerative current value is increasing.
- Function (f): a function of, when it is determined that the measured regenerative current value is not capable of reaching the target regenerative current value and is decreasing, detecting the maximum regenerative current value based on the history of the measured regenerative current value and adjusting and controlling the current flowing to motor 12 such that the regenerative current value reaches the maximum regenerative current value. In detail, a function of measuring the regenerative current while allowing the current to flow to the motor 12 under the feedback control in function (c), detecting the maximum regenerative current value based on the history of the measured regenerative current value when it is determined that the measured regenerative current value is not capable of reaching the target regenerative current value and is decreasing, and adjusting and controlling the current flowing to the motor 12 such that the regenerative current value reaches the maximum regenerative current value. That is, a function of, when it is determined that the regenerative current value is decreasing, controlling the motor current in the positive direction such that the regenerative current value is maximized.

In this embodiment, it is possible to obtain the same effects as those in the first embodiment.

Further, various aspects of the invention can also be implemented by appropriately combining the first embodiment, the second embodiment, and the third embodiment.

### EXPLANATIONS OF LETTERS OR NUMERALS

- 11: BATTERY
- 12: MOTOR
- 13: INVERTER CIRCUIT
- 14: INVERTER DRIVE CONTROL UNIT
- 15: MOTOR CURRENT COMMAND UNIT
- 16: POWER SUPPLY CURRENT MEASUREMENT UNIT

## Claims

1. A motor regenerative control method that, after allowing a positive current to flow from a battery to a motor such that the motor generates a positive torque, allows a negative current to flow to the motor such that a regenerative current flows from the motor to the battery to charge the battery, the motor regenerative control method comprising:
setting a target regenerative current value based on a state of the battery;
allowing the negative current to flow to the motor such that the regenerative current is close to the target regenerative current value and measuring the regenerative current while allowing the regenerative current to flow to the battery;
performing feedback control to allow the negative current to flow to the motor so as to eliminate a difference between measured regenerative current value and the target regenerative current value;
determining whether the measured regenerative current value is increasing or decreasing;
maintaining the feedback control when it is determined that the measured regenerative current value is increasing; and
when it is determined that the measured regenerative current value is not capable of reaching the target regenerative current value and is decreasing, detecting a maximum regenerative current value based on a history of the measured regenerative current value and adjusting and controlling the current flowing to the motor such that the regenerative current value reaches the maximum regenerative current value.

2. The motor regenerative control method according to claim 1,
wherein the regenerative current is measured continuously or intermittently.

3. The motor regenerative control method according to claim 1 or 2,
wherein, when it is determined whether the measured regenerative current value is increasing or decreasing, the measured regenerative current value is compared with a regenerative current value measured before the measured regenerative current value,
when the measured regenerative current value has increased by a predetermined value or more, it is determined that the measured regenerative current value is increasing, and
when the measured regenerative current value has decreased by a predetermined value or more, it is determined that the measured regenerative current value is decreasing.

4. The motor regenerative control method according to claim 1 or 2,
wherein the feedback control is PI control.

5. The motor regenerative control method according to claim 1 or 2,
wherein the motor regenerative control method is a control method that does not use an adaptive map value.

6. A motor control circuit that, after allowing a positive current to flow from a battery to a motor through an inverter circuit such that the motor generates a positive torque, allows a negative current to flow from the battery to the motor through the inverter circuit such that a regenerative current flows from the motor to the battery to charge the battery, the motor control circuit comprising:
an inverter drive control unit controlling drive of the inverter circuit;
a power supply current measurement unit that sets a target regenerative current value based on a state of the battery, allows the negative current to flow to the motor in order to make the regenerative current close to the target regenerative current value, and measures the regenerative current while allowing the regenerative current to flow to the battery;
a motor current command unit that determines a current command value for allowing the negative current to flow to the motor so as to eliminate a difference between a regenerative current value measured by the power supply current measurement unit and the target regenerative current value and inputs the current command value to the inverter drive control unit; and
a determination unit determining whether the regenerative current value measured by the power supply current measurement unit is increasing or decreasing,
wherein, when the determination unit determines that the regenerative current value measured by the power supply current measurement unit is increasing, the motor current command unit continues control to allow the negative current to flow to the motor so as to eliminate the difference between the regenerative current value measured by the power supply current measurement unit and the target regenerative current value, and
when the determination unit determines that the regenerative current value measured by the power supply current measurement unit is not capable of reaching the target regenerative current value and is decreasing, the power supply current measurement unit detects a maximum regenerative current value based on a history of the measured regenerative current value, and the motor current command unit determines a current command value for adjusting the current flowing to the motor such that the regenerative current value reaches the maximum regenerative current value and inputs the current command value to the inverter drive control unit.

7. A motor regenerative control program implementing regenerative control that, after allowing a positive current to flow from a battery to a motor such that the motor generates a positive torque, allows a negative current to flow to the motor such that a regenerative current flows from the motor to the battery to charge the battery, the motor regenerative control program implementing:
a function (a) of setting a target regenerative current value based on a state of the battery;
a function (b) of allowing the negative current to flow to the motor such that the regenerative current is close to the target regenerative current value and measuring the regenerative current while allowing the regenerative current to flow to the battery;
a function (c) of performing feedback control to allow the negative current to flow to the motor so as to eliminate a difference between measured regenerative current value and the target regenerative current value;
a function (d) of determining whether the measured regenerative current value is increasing or decreasing;
a function (e) of maintaining the feedback control when it is determined that the measured regenerative current value is increasing; and
a function (f) of, when it is determined that the measured regenerative current value is not capable of reaching the target regenerative current value and is decreasing, detecting a maximum regenerative current value based on a history of the measured regenerative current value and adjusting and controlling the current flowing to the motor such that the regenerative current value reaches the maximum regenerative current value.
